(19) Europäisches Patentamt

European Patent Office

Office européen des brevets

(11) Veröffentlichungsnummer: **0 479 101 B1**

# (12) EUROPÄISCHE PATENTSCHRIFT

(45) Veröffentlichungstag der Patentschrift: **06.12.95**

(21) Anmeldenummer: **91116283.2**

(22) Anmeldetag: **25.09.91**

Die Akte enthält technische Angaben, die nach dem Eingang der Anmeldung eingereicht wurden und die nicht in dieser Patentschrift enthalten sind.

(51) Int. Cl.6: **B32B 27/32**, B65D 65/40

(54) **Biaxial orientierte Polypropylenfolie für den Dreheinschlag.**

(30) Priorität: **02.10.90 DE 4031125**

(43) Veröffentlichungstag der Anmeldung:
**08.04.92 Patentblatt 92/15**

(45) Bekanntmachung des Hinweises auf die
Patenterteilung:
**06.12.95 Patentblatt 95/49**

(84) Benannte Vertragsstaaten:
**BE DE ES FR GB IT**

(56) Entgegenhaltungen:
**EP-A- 0 432 452
DE-A- 3 535 472
DE-A- 3 735 272
US-A- 4 921 749**

(73) Patentinhaber: **HOECHST AKTIENGESELL-
SCHAFT**

**D-65926 Frankfurt am Main (DE)**

(72) Erfinder: **Peiffer, Herbert, Dr.
Thüringer Strasse 26
W-6500 Mainz-Finthen (DE)**
Erfinder: **Murschall, Ursula, Dr.
Im Bacchuswinkel 11
W-6505 Nierstein (DE)**
Erfinder: **Schlögl, Gunter, Dr.
Finkenweg 2
W-6233 Kelkheim (DE)**

EP 0 479 101 B1

**Beschreibung**

Die vorliegende Erfindung betrifft eine orientierte, transparente, mehrschichtige Polypropylenfolie mit isotropen mechanischen Eigenschaften, bestehend aus einer Basisschicht und mindestens einer Deckschicht. Die Erfindung betrifft ferner ein Verfahren zur Herstellung solcher Folien und ihre Verwendung.

PP-Folien (PP = Polypropylen), die sich durch ein gutes Twistverhalten auszeichnen, sind bekannt.

In der GB-A 12 31 861 (ICI) wird eine boPP-Folie beschrieben (boPP = biaxial oriented Polypropylen), die nach dem bubble-Verfahren hergestellt wird und die eine gute Drehfähigkeit besitzt. Die Drehfähigkeit erhält die Folie durch Ausrüstung des PP-Homopolymeren mit einem niedrigmolekularen Kohlenwasserstoffharz und durch eine bevorzugte Orientierung der Folie in Maschinenrichtung. Für die Verarbeitung auf schnellaufenden Einschlagmaschinen ist die Folie zusätzlich antistatisch ausgerüstet.

Durch die wesentlich höhere Orientierung der Folie in Längsrichtung neigt sie beim Einwickeln, z.B. von Bonbons, zum Spleißen. Der Zwirbel kann an der Verdrillstelle abreißen. Von weiterem Nachteil sind die nicht befriedigenden Laufeigenschaften der Folie auf schnellaufenden Einwickelmaschinen. Verbesserungswürdig sind daneben auch noch die optischen Eigenschaften und die Schrumpfeigenschaften der Folie.

Zudem ist das beschriebene Verfahren zur Herstellung einer vorwiegend längsorientierten Folie sehr aufwendig (balanced Orientierung mittels bubble + Nachstrecken/-schrumpfen durch off-line Prozeß). Die Folie wird hierdurch vergleichsweise teuer.

In der DE-A 35 35 472 wird eine Folie beschrieben, die sich ebenfalls gut für den Dreheinschlag eignet. Durch die Zugabe von Siloxan und Antiblockmittel in den Deckschichten erhält die Folie die gewünschten Verarbeitungseigenschaften auf schnellaufenden Dreheinschlagautomaten. Nachteilig an der Folie sind die relativ hohen Harzgehalte, die für die gute Dreheinschlagsfähigkeit benötigt werden. Als Beispiel werden dort 25 Gew.-% angegeben. Hierdurch verteuert sich die Folie drastisch.

Bei kleineren Harzgehalten ist bei der beschriebenen Folie nicht gewährleistet, daß die geforderten Dreheigenschaften erreicht werden. Außerdem ist die Folie noch hinsichtlich ihres Schrumpfverhalten und in den optischen Eigenschaften verbesserungsbedürftig.

In der EP-A 0 317 276 (Courtaulds) wird ebenfalls eine Folie für den Dreheinschlag beansprucht. Aufgrund der in den Beispielen angegebenen Streckparameter ($\lambda_L$ = 3,5, $\lambda_q$ = 9-10) ist die Folie mehr in Querrichtung orientiert.

Die DE-A-35 35 472 beschreibt eine mehrschichtige, coextrudierte, transparente Polypropylenfolie für den Dreheinschlag. Die Basisschicht der Folie enthält Kohlenwasserstoffharz in einer Menge von 10 bis 40 Gew.-% und weist in Längs- und Querrichtung einen E-Modul von wenigstens 3 000 N/mm² auf. Die Deckschicht enthält ein Polydialkylsiloxan in einer Menge von 0,3 bis 1,5 Gew.-%.

Die DE-A-37 35 272 beschreibt eine siegelfähige, biaxial streckorientierte, durch Coextrusion hergestellte, symmetrisch aufgebaute, mehrschichtige Polypropylenfolie, bestehend aus einer Basisschicht und Deckschichten. Die Deckschichten enthalten einen Zusatz eines niedrigmolekularen Kohlenwasserstoffharzes und sind coronabehandelt.

Der vorliegenden Erfindung liegt daher die Aufgabe zugrunde, eine mehrschichtige, coextrudierte, hochtransparente, biaxial orientierte Polypropylen-Folie mit gutem Twistverhalten für den Dreheinschlag bereitzustellen, die wirtschaftlich günstiger herzustellen ist als bisherige Folien der genannten Gattung.

Diese Aufgabe wird durch eine Folie der eingangs genannten Gattung gelöst, deren kennzeichnende Merkmale darin bestehen, daß die Basisschicht Polypropylen und ein niedermolekulares Harz mit einem nach DIN 1995-U4 bestimmten Erweichungspunkt von 130 bis 180 °C enthält und mindestens eine Deckschicht im wesentlichen aus Propylenhomopolymeren oder aus Copolymeren, die überwiegend aus Propyleneinheiten zusammengesetzt sind, besteht und der bleibende Dehnwert der Folie sowohl parallel als auch senkrecht zur Maschinenrichtung größer als 60 % ist, wobei der bleibende Dehnwert mittels der Methode, wie beschrieben im letzten Absatz der Beschreibung, bestimmt wird.

Als bevorzugtes Polypropylen der Basisschicht wird im Rahmen der vorliegenden Erfindung ein isotaktisches Propylenhomopolymeres eingesetzt oder ein Copolymeres, das zum überwiegenden Anteil aus Propyleneinheiten zusammengesetzt ist. Solche Polymeren besitzen üblicherweise einen Schmelzpunkt von mindestens 140 °C, bevorzugt von 150 °C. Isotaktisches Polypropylen mit einem n-heptanlöslichen Anteil von Weniger als 15 Gew.-%, Copolymere von Ethylen und Propylen mit einem Ethylengehalt von Weniger als 10 Gew.-% und Copolymere von Propylen mit anderen Alphaolefinen mit 4 bis 8 Kohlenstoffatomen und mit einem Gehalt dieser Alphaolefine von Weniger als 10 Gew.-% stellen typische Beispiele für das bevorzugte thermoplastische Polypropylen der Basisschicht dar.

Die bevorzugten thermoplastischen Polymeren haben zweckmäßigerweise einen Schmelzflußindex im Bereich von 0,5 g/10 min bis 8 g/10 min bei 230 °C und 2,16 kp Belastung (DIN 53 735), insbesondere von 1,0 g/10 min bis 5 g/10 min.

Bei dem in der Basisschicht enthaltenen niedrigmolekularen Harz handelt es sich um ein natürliches oder synthetisches Harz mit einem Erweichungspunkt von 130 bis 180 °C, vorzugsweise 140 bis 160 °C (bestimmt nach DIN 1 995-U4). Unter den zahlreichen niedrigmolekularen Harzen sind die Kohlenwasserstoffharze bevorzugt, und zwar in Form der Erdölharze (Petroleumharze), Styrolharze, Cyclopentadienharze und Terpenharze (diese Harze sind in Ullmanns Enzyklopädie der Techn. Chemie, 4. Auflage, Band 12, Seiten 525 bis 555, beschrieben).

Die Erdölharze sind solche Kohlenwasserstoffharze, die durch Polymerisation von tiefzersetzten (deep-decomposed) Erdölmaterialien in Gegenwart eines Katalysators hergestellt werden. Diese Erdölmaterialien enthalten gewöhnlich ein Gemisch von harzbildenden Substanzen wie Styrol, Methylstyrol, Vinyltoluol, Inden, Methylinden, Butadien, Isopren, Piperylen und Pentylen. Die Styrolharze sind niedrigmolekulare Homopolymere von Styrol oder Copolymere von Styrol mit anderen Monomeren wie α-Methylstyrol, Vinyltoluol und Butadien. Die Cyclopentadienharze sind Cyclopentadienhomopolymere oder Cyclopentadiencopolymere, die aus Kohlenteerdestillaten und zerlegtem Erdölgas erhalten werden. Diese Harze werden hergestellt, indem die Materialien, die Cyclopentadien enthalten, während einer langen Zeit bei hoher Temperatur gehalten werden. In Abhängigkeit von der Reaktionstemperatur können Dimere, Trimere oder Oligomere erhalten werden.

Die Terpenharze sind Polymerisate von Terpenen, d.h. Kohlenwasserstoffen der Formel $C_{10}H_{16}$, die in fast allen etherischen Ölen oder ölhaltigen Harzen von Pflanzen enthalten sind, und phenolmodifizierte Terpenharze. Als spezielle Beispiele der Terpene sind α-Pinen, β-Pinen, Dipenten, Limonen, Myrcen, Camphen und ähnliche Terpene zu nennen. Bei den Kohlenwasserstoffharzen kann es sich auch um die sogenannten modifizierten Kohlenwasserstoffharze handeln. Die Modifizierung erfolgt im allgemeinen durch Reaktion der Rohstoffe vor der Polymerisation, durch Einführung spezieller Monomerer oder durch Reaktion des polymerisierten Produktes, wobei insbesondere Hydrierungen oder Teilhydrierungen vorgenommen werden.

Als Kohlenwasserstoffharze werden außerdem Styrolhomopolymerisate, Styrolcopolymerisate, Cyclopentadienhomopolymerisate, Cyclopentadiencopolymerisate und/oder Terpenpolymerisate mit einem Erweichungspunkt von jeweils 130 bis 180 °C, vorzugsweise 140 bis 160 °C, eingesetzt (bei den ungesättigten Polymerisaten ist das hydrierte Produkt bevorzugt).

Die wirksame Menge an niedermolekularem Harz beträgt 5 bis 30 Gew.-%, vorzugsweise 10 bis 25 Gew.-%, bezogen auf das Gesamtgewicht von Polypropylen und Harz.

Durch die Zugabe von niedermolekularem Harz werden die mechanischen Eigenschaften wie E-Modul und Reißfestigkeit erhöht. Andererseits erniedrigt sich durch die Harzzugabe deutlich die Reißdehnung - die Folie wird spröde. Dies wird für den Dreheinschlag gewünscht.

Von Vorteil ist ein Harz mit einer hohen Erweichungstemperatur, vorzugsweise größer 140 °C. Hierdurch kann die Querstrecktemperatur höher gewählt werden, wodurch der Schrumpf in der Folie kleiner wird. Ein kleiner Schrumpf ist wünschenswert, da ansonsten beim Bedrucken die Folie durch die Anwendung von Wärme beim Trocknen ihre Planlage verliert und durch den einsetzenden Schrumpf die Folie auch ihre Drehfähigkeit einbüßt. Eine bevorzugte Querstrecktemperatur bei Einsatz eines solchen Harzes ist 140-150 °C. Wird ein Harz mit niedrigerem Erweichungspunkt eingesetzt, z.B. 120 °C, und wird bei obigen Temperaturen verstreckt, so ist die Folie trübe.

Die Deckschicht bzw. die Deckschichten können auch wie die Basisschicht aus einem Propylenhomopolymeren bestehen, oder einem Copolymeren, das zum überwiegenden Anteil aus Propyleneinheiten zusammengesetzt ist. Solche Polymeren besitzen üblicherweise einen Schmelzpunkt von mindestens 140 °C, bevorzugt von mindestens 150 °C. Isotaktisches Polypropylen mit einem n-heptanlöslichen Anteil von weniger als 15 Gew.-%, Copolymere von Ethylen und Propylen mit einem Ethylengehalt von weniger als 10 Gew.-% und Copolymere von Propylen mit anderen Alphaolefinen mit 4 bis 8 Kohlenstoffatomen und mit einem Gehalt dieser Alphaolefine von weniger als 10 Gew.-% stellen typische Beispiele für das bevorzugte thermoplastische Polypropylen dar.

Die bevorzugten thermoplastischen Polymeren haben zweckmäßigerweise einen Schmelzflußindex im Bereich von 0,5 g/10 min bis 8 g/10 min bei 230 °C und 2,16 kp Belastung (DIN 53 735), insbesondere von 1,5 g/10 min bis 4 g/10 min.

Der Deckschicht oder den Deckschichten kann als Additiv ein Polydialkylsiloxan zugesetzt werden. Vorzugsweise ein Polydialkylsiloxan, das 1 bis 4 Kohlenstoffatome in der Alkygruppe enthält, wobei Polydimethylsiloxan besonders bevorzugt ist. Das Polydialkylsiloxan hat eine kinematische Viskosität von 1 000 bis $10^6$ mm²/sec bei 25 °C, vorzugsweise von 5 000 bis 50 000 mm²/sec bei 25 °C. Die Einsatzmenge des Polydialkylsiloxans in der Deckschicht bzw. den Deckschichten beträgt 0,2 bis 1,5 Gew.-%, vorzugsweise 0,3 bis 1 Gew.-%, bezogen auf das Gewicht der Deckschichten. Die Deckschichtdicke soll so gering wie möglich sein. Je dicker die Deckschichten sind, umso mehr verschlechtert sich die Twistfähigkeit der Folie.

3

Erfindungsgemäß soll die Deckschichtdicke kleiner 0,5 $\mu$m sein, vorzugsweise 0,3 - 0,4 $\mu$m.

Die Deckschichten können daneben ebenfalls mit dem oben beschriebenen niedermolekularen Harz ausgerüstet werden. Dies verbessert vor allem die Optik der Folie.

Die eingangs genannte Aufgabe der Erfindung wird auch durch ein Verfahren zur Herstellung der vorstehend beschriebenen Folie gelöst. Das erfindungsgemäße Verfahren besteht darin, daß mittels Coextrusion in einer Breitschlitzdüse zunächst eine Vorfolie hergestellt wird, die auf einer Kühlwalze verfestigt und daran anschließend in Längs- und Querrichtung durch Strecken orientiert wird. Erfindungsgemäß werden die Bedingungen in der Längs- und in der Querrichtung so gewählt, daß die Folie in beiden Richtungen isotrope Eigenschaften hat. Die Folie ist balanced orientiert. Die Voraussetzungen für die Erzielung von sehr guten Twisteigenschaften sind dann besonders günstig. Weiterhin hat sich gezeigt, daß die Drehfähigkeit um so besser wird, je höher die Folie längsverstreckt ist. Die erfindungsgemäßen Längsstreckungsverhältnisse sind 6-9, vorzugsweise 6,5-8,0. Dementsprechend sind auch die Querstreckverhältnisse zu wählen. Vorzugsweise ergibt sich hier ein Bereich von 6,5-8,0. Zweckmäßigerweise wird die Folie nicht - wie dies bei anderen Verpackungsfolien der Fall ist - hochquerverstreckt. Die Anwendungen von einem Längsstreckverhältnis von $\lambda_l$ = 5 und einem Querstreckverhältnis von $\lambda_q$ = 10 ergibt -auch bei der Zugabe von hohen Harzmengen - eine Folie mit schlechter Twistfähigkeit.

Die Twistfähigkeit der Folie kann sehr gut durch zwei physikalische Größen beschrieben werden. Die Twistfähigkeit ist umso besser, je größer die bleibende Dehnung (in Längs- und Querrichtung, Meßmethode s. Beispiele) und umso kleiner die Reißdehnung in Längsrichtung ist. Die Werte für obige physikalische Größen sollten in beide Richtungen etwa gleich groß sein.

Eine gute Twistfähigkeit ist gegeben, wenn die bleibenden Dehnwerte für beide Richtungen über 60 % sind.

Die Reißdehnung wird - wie der E-Modul und die Reißfestigkeit - nach DIN 53 455 bestimmt. Die erfindungsgemäßen Folien haben Reißdehnwerte in beiden Richtungen von kleiner 100%, vorzugsweise kleiner 90%. Sie sollten sich max. 10 % voneinander unterscheiden.

Die optischen Eigenschaften der erfindungsgemäßen Folien sind überraschenderweise hervorragend. Der Glanzwert liegt über 110, vorzugsweise über 120, bestimmt nach DIN 67 530 bei einem Meßwinkel von 20°. Die Trübung ist kleiner 2 %, bestimmt nach Gardner (ASTM D 1003-52).

Der Schrumpf wird nach Lagerung der Folie in einem Umluftofen bei 120 °C und einer Verweilzeit von 15 min gemessen.

Die Bedruckbarkeit der Folie wird durch eine der üblichen Oberflächenbehandlungen vor dem Aufrollen erreicht, z.B. Flammbehandlung oder elektrische Coronabehandlung.

Zur Coronabehandlung, die nach einer der bekannten Methoden durchgeführt werden kann, wir zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 10 000 V und 10 000 Hz), angelegt ist, daß Sprüh- oder Coronaentladungen stattfinden können. Durch die Sprüh- oder Coronaentladungen wird die Luft oberhalb der Folienoberfläche ionisiert und verbindet sich mit den Molekülen auf der Folienoberfläche, so daß polare Einlagerungen in der im wesentlichen unpolaren Polymermatrix entstehen.

Die Behandlungsintensitäten liegen im üblichen Rahmen. Behandlungsintensität von 38 bis 42 mN/m sind bevorzugt.

Beispiel 1

Es wurde durch Coextrusion und anschließender stufenweiser Orientierung in Längs- und in Querrichtung eine dreischichtige Folie mit einer Gesamtdicke von 25 $\mu$m hergestellt. Die Deckschichten hatten eine Dicke von jeweils 0,4 $\mu$m.

A-Basisschicht:

71,6 Gew.-% isotaktisches Polypropylen
28 Gew.-% hydriertes Cyclopentadienharz mit einer Erweichungstemperatur von 140°C
0,2 Gew.-% N,N-bis-ethoxyalkylamin und
0,2 Gew.% Erucasäureamid
Der Schmelzindex der Mischung beträgt    $I_2$ = 10 g/10 min bzw.
                                             $I_5$ = 50 g/10 min

B-Deckschichten:

99,2 Gew.-% statistisches Ethylen-Propylen-Copolymeres mit einem $C_2$-Gehalt von 4,5 Gew.-%
0,3 Gew.-% $SiO_2$ als Antiblockmittel mit einer mittleren Teilchengröße von 3 $\mu$m
0,5 Gew.-% Polydimethylsiloxan mit einer Viskosität von 30 000 $mm^2$/s
Der Schmelzindex der Deckschicht beträgt      $I_2$ = 12 g/10 min bzw.
$I_5$ = 60 g/10 min
Die Herstellungsbedingungen in den einzelnen Verfahrensschritten sind:

| Extrusion: | Temperaturen | A-Schicht:<br>B-Schichten: | 190 °C<br>270 °C |
|---|---|---|---|
| | Temperatur der Abzugswalze: | | 30 °C |
| Längsstreckung: | Temperatur T = 110 °C | | |
| | Längsstreckverhältnis = 6,5 | | |
| Querstreckung: | Temperatur T = 150 °C | | |
| | Querstreckverhältnis = 7,3 | | |
| | Konvergenz 25 % | | |
| Fixierung: | Temperatur T = 110 °C | | |

Die auf diese Weise hergestellte Folie hat die in der Tabelle aufgelisteten Eigenschaften (erste Zeile: Beispiel 1). Die Folie wurde vor der Aufrollung einer Coronabehandlung unterzogen, um eine Bedruckbarkeit zu gewährleisten. Die Oberflächenspannung der Folie infolge dieser Behandlung beträgt 40 nN/m.

Beispiel 2

Wie in Beispiel 1 wurde eine dreischichtige Folie mit einer Gesamtdicke von 25 $\mu$m und mit Deckschichtdicken von jeweils 0,4 $\mu$m hergestellt. Im Gegensatz zu Beispiel 1 beträgt jetzt der Harzgehalt 20 Gew.-% in der Basisschicht. Die Extrusionstemperaturen wurden gleichgehalten. Bedingt durch den geringeren Harzgehalt wurden die Bedingungen in der Längs- und Querstreckung wie folgt geändert.

| Längsstreckung: | Temperatur T = 115 °C<br>Längsstreckverhältnis = 7,2 |
|---|---|
| Querstreckung: | Temperatur T = 152 °C<br>Querstreckverhältnis = 7,2<br>Konvergenz 20 % |

Die Folieneigenschaften sind in der Tabelle - zweite Zeile (Beispiel 2) - aufgelistet.

Beispiel 3

Vergleichen mit den vorherigen Beispielen (1 und 2) wurde der Harzgehalt auf 15 % abgesenkt. Die Bedingungen in den Streckaggregaten sind wie folgt:

| Längsstreckung: | Temperatur T = 120 °C<br>Längsstreckverhältnis = 7,7 |
|---|---|
| Querstreckung: | Temperatur T = 153 °C<br>Querstreckverhältnis = 7,2 |

Beispiel 4

Im Vergleich zu Beispiel 1 wurde nur die Zusammensetzung der Deckschicht geändert. Diese enthält jetzt Polypropylen mit 20 Gew.-% des niedrigmolekularen Harzes (bezogen auf das Gesamtgewicht der Deckschicht). Wie die Tabelle zeigt, wird dadurch die bleibende Dehnung leicht verbessert, vor allem aber verbessert sich die Optik der Folie.

Vergleichsbeispiel 1

Im Vergleich zu Beispiel 1 ist die Erweichungstemperatur des Harzes jetzt 120 °C. Wie man anhand der Tabelle sieht, sind insbesondere die optischen Eigenschaften und die Schrumpfeigenschaften schlechter.

Vergleichsbeispiel 2

Im Vergleich zu Beispiel 1 wird nicht "balanced", sondern in "üblicher" Weise gestreckt. Der Harzgehalt beträgt 25 %.

| Längsstreckung: | Temperatur T = 110 °C<br>Längsstreckverhältnis = 5,5 |
|---|---|
| Querstreckung: | Temperatur T = 150 °C<br>Querstreckverhältnis = 10 |

Obwohl beide E-Modul-Werte größer 3000 N/mm$^2$ sind, ist das Twistverhalten äußerst schlecht, obwohl der Harzgehalt 25 % beträgt.

Vergleichsbeispiel 3

Wie im Beispiel 1 wurde eine 25 μm dicke Folie mit 20 Gew.-% niedermolekularem Harz in der Basis hergestellt. Die Deckschichten sind jetzt anstatt 0,4 μm ca. 0,8 μm dick. Wie man anhand der Tabelle sieht, sind jetzt die Dreheigenschaften und die optischen Eigenschaften schlechter als bei der erfindungsgemäßen Folie.

Auswertung

Das Dreheinschlagsverhalten (letzte Spalte der Tabelle) der hergestellten Folien wurde auf Bonboneinwickelmaschinen beurteilt. Es wurden eine langsame Einwickelmaschine (500 Takte/min, Fa. Hänsel) und eine schnelle Einwickelmaschine (1 200 Takte/min, Fa. Nagema) eingesetzt. Als Einschlageigenschaften wurde das eigenständige Aufdrehen der eingewickelten Bonbons, das Auswickelverhalten beim Auspacken der Bonbons sowie der Füllgrad gleich großer Bonbonbeutel beurteilt. Die festgestellten Eigenschaften wurden wie folgt bewertet:

Bestimmung der bleibenden Dehnung

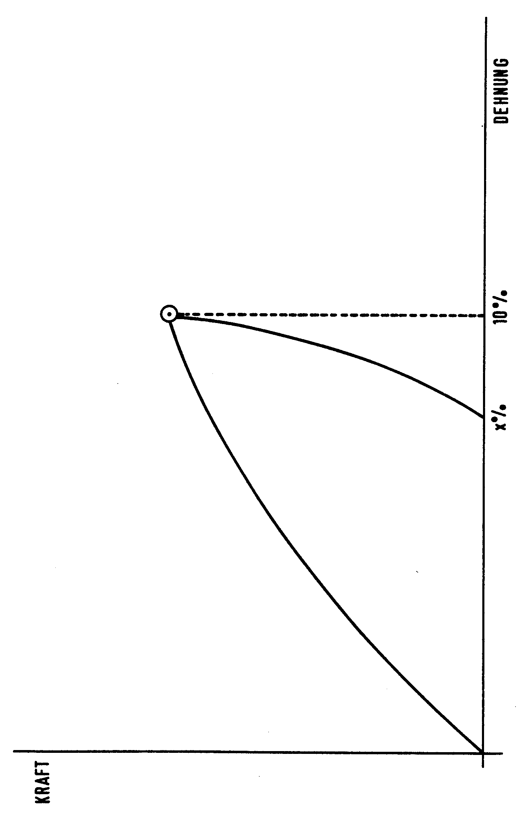

Aus der Folie wurde ein 15 mm breiter Folienstreifen quer zur Maschinenrichtung geschnitten und in eine Zugprüfmaschine eingespannt, wobei die Einspannlänge 200 mm betrug. Die Probe wurde dann mit 20 mm/min entsprechend 10 %/min gedehnt. Nach einer Dehnung von 10 %, d.h. bei einer Probenlänge von 220 mm, wurde die Probe automatisch mit gleicher Geschwindigkeit entspannt. Die Bestimmung der bleibenden Dehnung aus dem Kraft-Dehnungs-Diagramm ist in der beigefügten Figur schematisch dargestellt. Die bleibende Dehnung berechnet sich dabei gemäß

$$D_b = \frac{x\%}{10\%} * 100\%$$

+ +     sehr gut

o mäßig
-- sehr schlecht

Tabelle 1

| | bl. Dehnung längs/quer % | | E-Modul längs/quer N/mm² | | Reißfestigkeit längs/quer N/mm² | | Reißdehnung längs/quer % | | Schrumpf längs/quer % | | Glanz | Trübung % | Güte des Dreh-einschlages |
|---|---|---|---|---|---|---|---|---|---|---|---|---|---|
| | längs | quer | längs | quer | längs | quer | längs | quer | längs | quer | | | |
| Beispiel 1 | 61 | 62 | 3200 | 3400 | 205 | 215 | 95 | 70 | 11 | 7 | 110 | 1,5 | ++ |
| Beispiel 2 | 63 | 65 | 3500 | 3700 | 225 | 210 | 85 | 90 | 8 | 5 | 115 | 1,6 | ++ |
| Beispiel 3 | 62 | 62 | 3250 | 3300 | 215 | 210 | 80 | 85 | 6 | 3 | 113 | 1,7 | ++ |
| Beispiel 4 | 62 | 63 | 3300 | 3400 | 210 | 210 | 90 | 80 | 11 | 8 | 123 | 1,4 | + |
| Vergleichsbeispiel 1 | 61 | 61 | 3150 | 3400 | 200 | 210 | 100 | 82 | 13 | 10 | 110 | 2,0 | ++ |
| Vergleichsbeispiel 2 | 63 | 47 | 3050 | 4700 | 190 | 360 | 120 | 50 | 18 | 12 | 117 | 1,5 | - |
| Vergleichsbeispiel 3 | 59 | 57 | 3100 | 3400 | 195 | 220 | 105 | 85 | 12 | 8 | 105 | 2,3 | o |

**Patentansprüche**

1. Biaxial orientierte, transparente, mehrschichtige Polypropylenfolie mit isotropen mechanischen Eigenschaften, bestehend aus einer Basisschicht und mindestens einer Deckschicht, dadurch gekennzeichnet, daß die Basisschicht Polypropylen und ein niedermolekulares Harz mit einem nach DIN 1995-U4 bestimmten Erweichungspunkt von 130 bis 180 °C enthält und mindestens eine Deckschicht im wesentlichen aus Propylenhomopolymeren oder aus Copolymeren, die überwiegend aus Propyleneinheiten zusammengesetzt sind, besteht und der bleibende Dehnwert der Folie sowohl parallel als auch senkrecht zur Maschinenrichtung größer als 60 % ist, wobei der bleibende Dehnwert mittels der Methode, wie beschrieben im letzten Absatz der Beschreibung, bestimmt wird.

2. Polypropylenfolie nach Anspruch 1, dadurch gekennzeichnet, daß die nach DIN 53 455 bestimmte Reißdehnung der Folie sowohl parallel als auch senkrecht zur Maschinenrichtung kleiner als 100 % ist und sich in beiden Richtungen maximal 10 % voneinander unterscheidet.

3. Polypropylenfolie nach Anspruch 1 oder 2, dadurch gekennzeichnet, daß die Basisschicht das niedermolekulare Harz in einem Anteil von 5 bis 30 Gew.-% enthält.

4. Polypropylenfolie nach einem oder mehreren der Ansprüche 1 bis 3, dadurch gekennzeichnet, daß die Basisschicht 70 bis 95 Gew.-% Polypropylen enthält.

5. Polypropylenfolie nach einem oder mehreren der Ansprüche 1 bis 4, dadurch gekennzeichnet, daß die Deckschicht oder die Deckschichten ein Antiblockmittel mit einer mittleren Teilchengröße von 2 bis 5 μm enthalten.

6. Polypropylenfolie nach einem oder mehreren der Ansprüche 1 bis 5, dadurch gekennzeichnet, daß die Deckschicht oder die Deckschichten Polydimethylsiloxan enthalten.

7. Polypropylenfolie nach einem oder mehreren der Ansprüche 1 bis 6, dadurch gekennzeichnet, daß die Deckschicht oder die Deckschichten maximal 0,5 μm dick sind.

8. Polypropylenfolie nach einem oder mehreren der Ansprüche 1 bis 7, dadurch gekennzeichnet, daß das niedrigmolekulare Harz ausgewählt wird aus der Gruppe der Erdölharze, Styrolharze, Cyclopentadienharze und Terpenharze.

9. Verfahren zur Herstellung einer Polypropylenfolie gemäß Anspruch 1, dadurch gekennzeichnet, daß man die den einzelnen Schichten der Folie entsprechenden Schmelzen durch eine Flachdüse coextrudiert, die so erhaltene Folie zur Verfestigung abkühlt und daran anschließend in Längs- und Querrichtung durch Strecken so orientiert, daß die Folie in beiden Richtungen isotrope mechanische Eigenschaften hat.

10. Verfahren nach Anspruch 9, dadurch gekennzeichnet, daß das Längsstreckverhältnis 6 bis 9 und das Querstreckverhältnis ebenfalls 6 bis 9 beträgt.

11. Verwendung einer Folie nach einem oder mehreren der Ansprüche 1 bis 8 als Verpackungsmaterial.

12. Verwendung einer Folie nach einem oder mehreren der Ansprüche 1 bis 8 als Folie für den Dreheinschlag.

**Claims**

1. Biaxially oriented, transparent, multilayer polypropylene film having isotropic mechanical properties, comprising a base layer and at least one top layer, characterized in that the base layer contains polypropylene and a low-molecular-weight resin having a softening point, determined in accordance with DIN 1995-U4, of from 130 to 180°C, and at least one top layer essentially comprises propylene homopolymers or copolymers predominantly composed of propylene units, and the residual elongation of the film is greater than 60%, both parallel and perpendicular to the machine direction, the residual elongation being determined by the method as described in the final paragraph of the description.

2.  Polypropylene film according to Claim 1, characterized in that the elongation at break of the film, determined in accordance with DIN 53 455, is less than 100% both parallel and perpendicular to the machine direction, and differs by a maximum of 10% from one another in the two directions.

3.  Polypropylene film according to Claim 1 or 2, characterized in that the base layer contains the low-molecular-weight resin in a proportion of from 5 to 30% by weight.

4.  Polypropylene film according to one or more of Claims 1 to 3, characterized in that the base layer contains from 70 to 95% by weight of polypropylene.

5.  Polypropylene film according to one or more of Claims 1 to 4, characterized in that the top layer or top layers contain(s) an antiblocking agent having a mean particle size of from 2 to 5 $\mu$m.

6.  Polypropylene film according to one or more of Claims 1 to 5, characterized in that the top layer or top layers contain(s) polydimethylsiloxane.

7.  Polypropylene film according to one or more of Claims 1 to 6, characterized in that the top layer or top layers is (are) a maximum of 0.5 $\mu$m thick.

8.  Polypropylene film according to one or more of Claims 1 to 7, characterized in that the low-molecular-weight resin is selected from the group consisting of petroleum resins, styrene resins, cyclopentadiene resins and terpene resins.

9.  Process for the production of a polypropylene film according to Claim 1, characterized in that the melts corresponding to the individual layers of the film are extruded through a flat-film die, the resultant film is cooled for solidification and subsequently oriented in the longitudinal and transverse direction by stretching so that the film has isotropic mechanical properties in both directions.

10. Process according to Claim 9, characterized in that the longitudinal stretching ratio is from 6 to 9 and the transverse stretching ratio is likewise from 6 to 9.

11. Use of a film according to one or more of Claims 1 to 8 as a packaging material.

12. Use of a film according to one or more of Claims 1 to 8 as a film for twist wrapping.

**Revendications**

1.  Feuille de polypropylène multicouche, transparente, à orientation biaxiale, possédant des propriétés mécaniques isotropes, constituée par une couche de base et au moins une couche de revêtement, caractérisée en ce que la couche de base contient du polypropylène et une résine à bas poids moléculaire possédant un point de ramollissement de 130 à 180°C, déterminé conformément à DIN 1995-U4, et au moins une couche de revêtement constituée essentiellement par des homopolymères de propylène ou par des copolymères, qui sont constitués de façon prépondérante par des motifs de propylène, et la valeur d'allongement résiduel de la feuille est supérieure à 60 % aussi bien parallèlement que perpendiculairement au sens machine, la valeur d'allongement résiduelle étant déterminée au moyen du procédé tel que décrit dans le dernier paragraphe de la description.

2.  Feuille de polypropylène selon la revendication 1, caractérisée en ce que l'allongement à la rupture déterminé selon DIN 53455 de la feuille, aussi bien parallèlement que perpendiculairement au sens machine, est inférieur à 100 %, et diffère au maximum de 10 % entre deux directions.

3.  Feuille de polypropylène selon la revendication 1 ou 2, caractérisée en ce que la couche de base contient la résine à bas poids moléculaire en un pourcentage de 5 à 30 % en poids.

4.  Feuille de polypropylène selon une ou plusieurs des revendications 1 à 3, caractérisée en ce que la couche de base contient 70 à 95 % du polypropylène.

9

**5.** Feuille de polypropylène selon une ou plusieurs des revendications 1 à 4, caractérisée en ce que la couche de revêtement ou les couches de revêtement contiennent un agent antiadhésif possédant une taille moyenne de particules de 2 à 5 $\mu$m.

**6.** Feuille de polypropylène selon une ou plusieurs des revendications 1 à 5, caractérisée en ce que la couche de revêtement ou les couches de revêtement contiennent du polydiméthylsiloxane.

**7.** Feuille de polypropylène selon une ou plusieurs des revendications 1 à 6, caractérisée en ce que la couche de revêtement ou les couches de revêtement possèdent une épaisseur maximale de 0,5 $\mu$m.

**8.** Feuille de polypropylène selon une ou plusieurs des revendications 1 à 7, caractérisée en ce que la résine à bas poids moléculaire est choisie dans le groupe des résines de pétrole, des résines de styrène, des résines de cyclopentadiène et des résines terpéniques.

**9.** Procédé pour fabriquer une feuille de polypropylène selon la revendication 1, caractérisé en ce qu'on réalise la coextrusion des masses fondues, qui correspondent aux différentes couches de la feuille, au moyen d'une buse plate, on refroidit la feuile obtenue, pour sa solidification et ensuite on l'oriente dans la direction longitudinale et dans la direction transversale par étirage de sorte que la feuille possède, dans les deux directions, des propriétés mécaniques isotropes.

**10.** Procédé selon la revendication 9, caractérisé en ce que le rapport d'étirage longitudinal est compris entre 6 et 9 et que le rapport d'étirage transversal est également compris entre 6 et 9.

**11.** Utilisation d'une feuille selon une ou plusieurs des revendications 1 à 8 en tant que matériau d'emballage.

**12.** Utilisation d'une feuille selon une ou plusieurs des revendications 1 à 8 en tant que feuille d'enveloppement par toronnage.

KRAFT

DEHNUNG

10%

x%